(19) Europäisches Patentamt
European Patent Office
Office européen des brevets

(11) **EP 3 980 308 B1**

(12) **FASCICULE DE BREVET EUROPEEN**

(45) Date de publication et mention
de la délivrance du brevet:
**14.06.2023 Bulletin 2023/24**

(21) Numéro de dépôt: **20719208.9**

(22) Date de dépôt: **22.04.2020**

(51) Classification Internationale des Brevets (IPC):
**B60W 40/10** (2012.01)    **B60W 50/14** (2020.01)
**B60W 30/12** (2020.01)    **B62D 15/02** (2006.01)

(52) Classification Coopérative des Brevets (CPC):
**B60W 40/10; B60W 30/12; B60W 50/14;**
**B62D 15/025;** B60W 2050/146; B60W 2520/10;
B60W 2540/20; B60W 2552/10; B60W 2552/50;
B60W 2552/53; B60W 2554/00; B60W 2554/20;
B60W 2554/40; B60W 2554/4041; B60W 2554/80;

(Cont.)

(86) Numéro de dépôt international:
**PCT/EP2020/061130**

(87) Numéro de publication internationale:
**WO 2020/244841 (10.12.2020 Gazette 2020/50)**

(54) **PROCÉDÉ DE CALCUL DE LA POSITION LATÉRALE D'UN VÉHICULE AUTOMOBILE**

VERFAHREN ZUR BERECHNUNG DER SEITLICHEN POSITION EINES KRAFTFAHRZEUGES

METHOD FOR CALCULATING THE LATERAL POSITION OF A MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.06.2019 FR 1906049**

(43) Date de publication de la demande:
**13.04.2022 Bulletin 2022/15**

(73) Titulaires:
• **Renault s.a.s**
  **92100 Boulogne Billancourt (FR)**
• **NISSAN MOTOR Co., Ltd.**
  **Yokohama-shi, Kanagawa 221-0023 (JP)**

(72) Inventeurs:
• **GERMAIN, Guillaume**
  **78000 Versailles (FR)**
• **BOT, Ludovic**
  **35000 Rennes (FR)**
• **QUILLIARD, Raphael**
  **91300 Massy (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A1- 3 002 178      JP-A- 2019 059 451
US-A1- 2005 228 588    US-A1- 2017 326 980**

EP 3 980 308 B1

(52) Classification Coopérative des Brevets (CPC):
(Cont.)
B60W 2554/801

**Description**

**Domaine Technique de l'invention**

L'invention concerne un procédé de calcul de la position latérale d'un véhicule automobile, notamment d'un véhicule autonome. L'invention porte aussi sur un véhicule automobile, notamment un véhicule autonome, comprenant des moyens de mettre en oeuvre un tel procédé de calcul de la position latérale.

**Etat de la technique antérieure**

Les véhicules autonomes sont équipés de moyens de détection de l'environnement du véhicule et d'un dispositif de direction asservi. Notamment, les moyens de détections sont capables d'identifier la voie de circulation sur laquelle se trouve le véhicule. Un calculateur relié à la fois aux moyens de détection et au dispositif de direction peut commander le dispositif de direction de sorte à ce que le véhicule se maintienne au centre de la voie de circulation. Dans cette optique, on connait des systèmes d'assistance de centrage sur voie, également dénommés par l'anglicisme "Lane Centering Assist" ou LCA. De tels systèmes font notamment l'objet de prescriptions décrites dans le règlement n°R79 de l'UNECE. Des exemples de tels systèmes sont connus de US 2017/326980 A1, JP 2019 059451 A, US 2005/228588 A1 et EP 3002178 A1.

Cependant, les systèmes d'assistance de centrage sur voie connus positionnent le véhicule autonome d'une manière non naturelle. La position latérale du véhicule sur sa voie de circulation ne correspond pas à celle qu'adopterait un conducteur s'il pouvait contrôler lui-même le dispositif de direction. Ainsi, le véhicule autonome ne se fond pas dans le flux de circulation et les risques de collision avec d'autres véhicules ou objets peuvent être augmentés. En particulier, les systèmes d'assistance de centrage sur voie connus ne permettent pas d'optimiser les distances latérales de sécurité avec d'autres véhicules ou obstacles. En situation d'embouteillage, les systèmes connus ne permettent pas non plus de décaler latéralement le véhicule pour laisser suffisamment de place à une moto ou un véhicule d'urgence qui remontrait une file de voitures.

**Présentation de l'invention**

Le but de l'invention est de fournir un procédé de calcul de la position latérale d'un véhicule automobile remédiant aux inconvénients ci-dessus et améliorant les procédés connus de l'art antérieur.

Plus précisément, un premier objet de l'invention est un procédé permettant de calculer une position latérale du véhicule qui soit sûre et sans danger.

Un second objet de l'invention est une solution est un procédé permettant de calculer une position latérale du véhicule permettant de faciliter la circulation des autres usagers de la route.

**Résumé de l'invention**

L'invention se rapporte à un procédé de calcul d'une position latérale d'un véhicule automobile ego sur une voie de circulation, le procédé comprenant :

- une première étape de calcul d'une première position latérale théorique du véhicule ego sur ladite voie de circulation en fonction d'une position latérale sur ladite voie de circulation de véhicules précédant le véhicule ego et de véhicules succédant au véhicule ego,
- une deuxième étape de calcul d'une deuxième position latérale théorique du véhicule ego sur ladite voie de circulation en fonction de la position de véhicules sur des voies de circulation adjacentes à ladite voie de circulation,
- une troisième étape de calcul d'une troisième position latérale théorique du véhicule ego sur ladite voie de circulation en fonction d'obstacles statiques détectés sur des côtés de ladite voie de circulation,
- une quatrième étape de calcul de la position latérale du véhicule ego par une moyenne pondérée de la première position latérale, de la deuxième position latérale et de la troisième position latérale.

La première étape de calcul peut comprendre une sous-étape de calcul d'une moyenne pondérée des positions latérales de véhicules précédent et de véhicules succédant sur ladite voie de circulation, des coefficients de pondération de chaque position latérale étant fonction de la distance longitudinale séparant le véhicule ego du véhicule précédant et/ou du véhicule succédant considéré, et de la vitesse du véhicule précédant et/ou du véhicule succédant considéré.

La deuxième étape de calcul peut comprendre :

- une sous-étape de calcul d'un couloir de sécurité théorique de part et d'autre d'une ligne de démarcation, la ligne de démarcation s'étendant entre la voie de circulation du véhicule ego et une voie de circulation adjacente à la voie de circulation du véhicule ego,
- une sous-étape de détection de la présence d'un véhicule dans le couloir de sécurité,
- une sous-étape de calcul de la deuxième position latérale théorique en fonction de la distance séparant le véhicule ego du véhicule détecté dans ledit couloir de sécurité et en fonction de la vitesse du véhicule détecté dans ledit couloir de sécurité.

Le procédé de calcul peut comprendre une première condition d'exécution du procédé de calcul, la première condition d'exécution étant remplie:

- si des lignes de démarcation de la voie de circulation du véhicule ego sont détectées par le véhicule ego, et
- si la courbure de la voie de circulation du véhicule ego est inférieure ou égale à un seuil prédéfini.

Le procédé de calcul peut comprendre une deuxième condition d'exécution de la première étape de calcul, la deuxième condition d'exécution étant remplie :

- si au moins un premier véhicule précédant le véhicule ego est détecté,
- si au moins un deuxième véhicule précédant ou succédant le véhicule ego est détecté, et
- si aucun clignotant du véhicule ego n'est activé.

La quatrième étape de calcul peut comprendre :

- une sous-étape de détection de conditions de circulation du véhicule ego, et
- une sous-étape de calcul d'un coefficient de pondération de la première position latérale théorique, d'un coefficient de pondération de la deuxième position latérale théorique, et d'un coefficient de pondération de la troisième position latérale théorique en fonction des conditions de circulation du véhicule ego détectées.

La quatrième étape de calcul peut comprendre :

- une sous-étape de limitation de l'écart entre la position latérale théorique du véhicule ego et une ligne médiane théorique de la voie de circulation du véhicule ego, et/ou
- une sous-étape de limitation de la variation temporelle de la position latérale théorique du véhicule ego.

Le procédé de calcul peut comprendre :

- une cinquième étape de commande autonome d'un dispositif de direction du véhicule ego pour faire prendre au véhicule ego la position latérale théorique calculée lors de la quatrième étape,
- une sixième étape d'affichage sur un écran du véhicule ego d'une indication visuelle indiquant la position relative du véhicule ego par rapport une ligne médiane théorique de la voie de circulation du véhicule ego.

L'invention se rapporte également à un produit programme d'ordinateur comprenant des instructions de code de programme enregistrées sur un support lisible par ordinateur pour mettre en oeuvre les étapes du procédé tel que défini précédemment lorsque ledit programme fonctionne sur un ordinateur.

L'invention se rapporte également à un support d'enregistrement de données, lisible par un ordinateur, sur lequel est enregistré un programme d'ordinateur comprenant des instructions de code de programme de mise en oeuvre du procédé tel que défini précédemment

L'invention se rapporte également à un système de direction comprenant un calculateur, un dispositif de direction asservi au calculateur, un écran des moyens de détection d'un environnement, les moyens de détection étant reliés au calculateur, le calculateur étant apte à mettre en oeuvre le procédé de calcul tel que défini précédemment.

L'invention se rapporte également à un véhicule automobile, notamment un véhicule autonome, le véhicule comprenant un calculateur, un dispositif de direction asservi au calculateur, un écran et des moyens de détection d'un environnement du véhicule, les moyens de détection étant reliés au calculateur, le calculateur étant apte à mettre en oeuvre le procédé de calcul tel que défini précédemment.

## Présentation des figures

Ces objets, caractéristiques et avantages de la présente invention seront exposés en détail dans la description suivante d'un mode de réalisation particulier fait à titre non-limitatif en relation avec les figures jointes parmi lesquelles :

## EP 3 980 308 B1

La figure 1 est une vue schématique d'un véhicule automobile selon un mode de réalisation de l'invention.

La figure 2 est une vue schématique de dessus d'une route comportant trois voies de circulation sur lesquelles roule le véhicule selon l'invention et des véhicules environnant.

La figure 3 est un synoptique d'un procédé de calcul d'une position latérale du véhicule selon un mode de réalisation de l'invention.

La figure 4 est une vue schématique de dessus d'un premier exemple d'une situation de conduite.

La figure 5 est une vue schématique de dessus d'un deuxième exemple d'une situation de conduite.

La figure 6 est une vue schématique de dessus d'un troisième exemple d'une situation de conduite.

La figure 7 est une vue schématique de dessus d'un quatrième exemple d'une situation de conduite.

**Description détaillée**

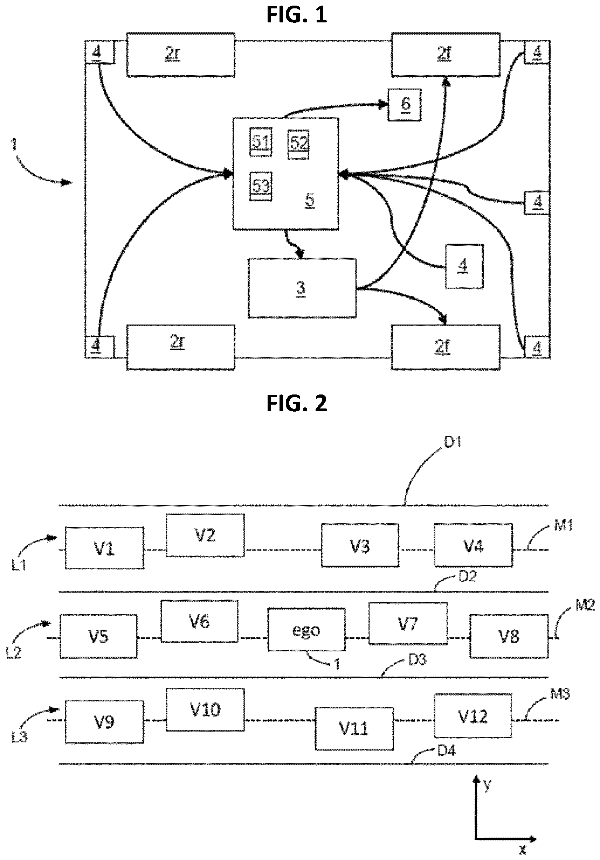

La figure 1 illustre schématiquement un véhicule 1 automobile selon un mode de réalisation de l'invention. Le véhicule 1 peut être de toute nature. Notamment, il peut être par exemple un véhicule particulier, un véhicule utilitaire, un camion ou un bus. Le véhicule 1 comprend deux roues avant 2f, deux roues arrière 2r, un dispositif de direction 3 relié aux deux roues avant 2f. Les deux roues avant 2f sont des roues directrices. Leur orientation peut être contrôlée par un système de direction. Le système de direction comprend notamment un dispositif de direction 3 et des moyens de détections de l'environnement du véhicule. Ces moyens de détections sont formés par des capteurs 4 de type ADAS. Ces capteurs peuvent être par exemple des capteurs ultrasons, des caméras ou des radars. Ils sont aptes à détecter des objets ou d'autres véhicules positionnés tout autour du véhicule 1. Selon le mode de réalisation présenté, le véhicule comprend six capteurs 4, parmi lesquels cinq capteurs radar positionnés aux quatre coins du véhicule et un à l'avant sensiblement au milieu du véhicule, ainsi qu'une caméra apte à observer la route, notamment à l'avant du véhicule 1. En variante, les capteurs 4 pourraient être en nombre différent et être agencés en d'autres positions du véhicule 1.

Le système de direction comprend en outre un calculateur 5 ou unité de commande électronique. Le calculateur 5 comprend notamment une mémoire 51, un microprocesseur 52 et une interface 53 d'entrée/sortie. Le calculateur est relié grâce à son interface 53 aux capteurs 4 de sorte à pouvoir recevoir en entrée les signaux issus de ces capteurs. Le calculateur est également relié grâce à son interface 53 au dispositif de direction 3 de sorte à émettre au dispositif de direction 3 des ordres de commande d'orientation des roues directrices 2f. Enfin, le véhicule 1 comprend également un tableau de bord équipé d'un écran 6. L'écran 6 est relié au calculateur 5 et peut afficher des informations transmises par le calculateur à destination d'un utilisateur du véhicule 1. La mémoire 51 est un support d'enregistrement de données sur lequel est enregistré un programme d'ordinateur comprenant des instructions de code de programme de mise en oeuvre d'un procédé de calcul d'une position latérale du véhicule 1 selon un mode de réalisation l'invention. Le microprocesseur 52 est apte à exécuter les instructions de code enregistrées dans la mémoire 51.

Le véhicule 1 est un véhicule autonome. Notamment, le dispositif de direction 3, en coopération avec le calculateur 5 et les capteurs 4, peut contrôler de manière autonome l'orientation des roues directrices 2f du véhicule. Ainsi, le véhicule peut se déplacer sans aucun passager à son bord ou bien avec des passagers ne contrôlant pas directement la trajectoire du véhicule.

Le véhicule 1 est apte à rouler sur une route empruntée par d'autres véhicules. Notamment la figure 2 illustre le véhicule 1, également dénommé véhicule ego, sur une route comprenant trois voies de circulation L1, L2, L3. Le terme "ego" est un terme uniquement distinctif permettant de bien différencier le véhicule 1 des véhicules environnant le véhicule 1. Les trois voies de circulations sont adjacentes les unes aux autres. Les trois voies de circulations sont identifiées et séparées par des lignes de démarcation D1, D2, D3, D4, par exemple sous la forme de lignes de couleur blanche ou de couleur jaune, en trait plein ou en pointillés. De telles lignes de démarcation peuvent être peintes sur le sol et avoir une largeur sensiblement constante. Des véhicules peuvent changer de voie de circulation, ou autrement dit changer de fil et rouler par au-dessus les lignes de démarcation. Le sens de circulation des trois voies de circulation est indiqué par un vecteur X. Le véhicule ego circule sur la voie de circulation L2 centrale. D'autres véhicules V1, V2, V3, V4, V5, V6, V7, V8, V9, V10, V11, V12 circulent également sur les voies de circulation L1, L2, L3. Les véhicules V1, V2, V3 et V4 circulent sur la voie de circulation L1 de gauche. Les véhicules V5, V6, V7 et V8 circulent sur la voie de circulation L2 centrale. Notamment, les véhicules V5 et V6 sont positionné derrière le véhicule ego et les véhicules V7 et V8 sont positionné devant le véhicule ego. Autrement dit, les véhicules V5 et V6 sont des véhicules succédant au véhicule ego et les véhicules V7 et V8 sont des véhicules précédant le véhicule ego. Les véhicules succédant et précédant sont donc sur la même voie de circulation que le véhicule ego. Enfin, les véhicules V9, V10, V11 et V12 circulent sur la voie de circulation L3 de droite. Les véhicules V1 à V12 peuvent constituer l'ensemble des véhicules aptes à être détectés par les capteurs 4 du véhicule. Bien que représentés par des rectangles de taille égale sur la figure 2, ces véhicules peuvent en réalité être de toute nature et de toute dimensions. Ils peuvent avancer à des vitesses différentes et avoir des positions relatives évoluant avec le temps. D'autres véhicules circulant plus en amont ou plus en aval sur la même route peuvent ne pas être pris en considération.

La position latérale ou offset d'un véhicule circulant sur la route peut être définie comme la position du véhicule sur sa voie de circulation suivant la direction perpendiculaire à la direction dans laquelle le véhicule se déplace. En référence à la figure 2, les véhicules se déplacent parallèlement au vecteur X. La position latérale d'un véhicule désigne donc la position du véhicule suivant le vecteur Y, perpendiculaire au vecteur X. On peut définir une ligne médiane M1, M2, M3 théorique pour chaque voie de circulation L1, L2, L3 comme la ligne positionnée à équidistance des lignes de démarcation D1, D2, D3, D4 délimitant la voie de circulation. La ligne médiane M1 est donc positionnée à équidistance des lignes de démarcation D1 et D2. La ligne médiane M2 est positionnée à équidistance des lignes de démarcation D2 et D3. La ligne médiane M3 est positionnée à équidistance des lignes de démarcation D3 et D4. Les lignes médianes M1, M2, et M3 sont des lignes théoriques car elles ne sont pas matérialisées sur les voies de circulation mais calculées en fonction des lignes de démarcation D1, D2, D3, D4. La position latérale d'un véhicule sur une voie de circulation donnée peut être définie ou calculée en référence à la ligne médiane de cette voie de circulation et suivant l'orientation du vecteur Y. Par exemple, la position latérale peut être positive lorsque le centre du véhicule considéré est positionné, ou autrement dit déporté, à gauche de la ligne médiane et négative lorsque le centre du véhicule considéré est déporté à droite de la ligne médiane.

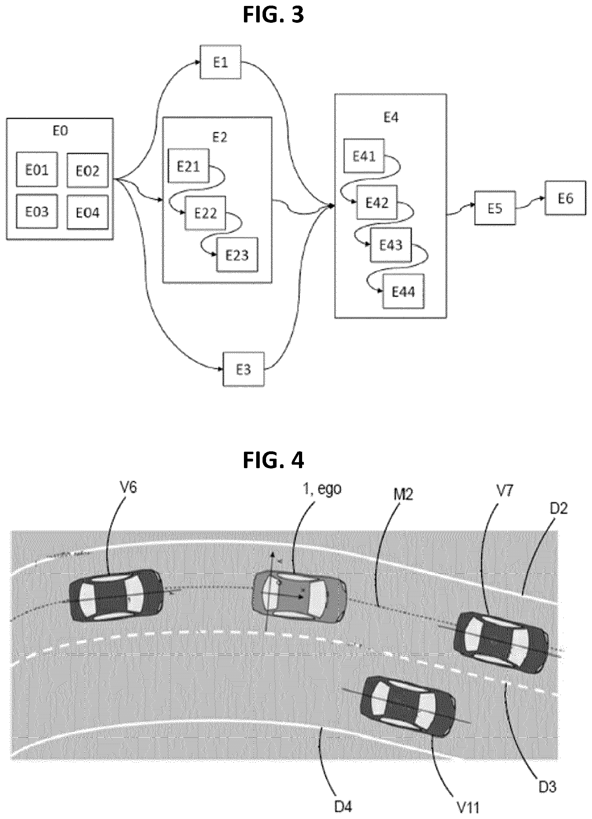

La figure 3 illustre schématiquement un procédé de calcul d'une position latérale d'un véhicule automobile ego sur une voie de circulation selon un mode de réalisation de l'invention. Le procédé comprend une succession d'étapes E0, E1, E2, E3, E4, E5, E6 dont le but est de calculer une position latérale Tego pour le véhicule ego, puis de commander le dispositif de direction 3 pour que le véhicule ego adopte la position latérale Tego calculée. L'étape E0 est une étape d'initialisation du procédé de calcul. La première étape E1 est une étape de calcul d'une première position latérale T1 théorique du véhicule ego. La première position latérale T1 est calculée en fonction de la position latérale de véhicules précédant le véhicule ego et/ou succédant au véhicule ego, sur la même voie de circulation que le véhicule ego. En référence à la situation représentée sur la figure 2, la première position latérale T1 est donc calculée en fonction de la position latérale des véhicules succédant V5 et V6 et en fonction de la position latérale des véhicules précédant V7 et V8. La deuxième étape E2 est une étape de calcul d'une deuxième position latérale T2 théorique du véhicule ego. La deuxième position latérale T2 est calculée en fonction de la position de véhicules sur des voies de circulation adjacentes à la voie de circulation du véhicule ego. En référence à la situation représentée sur la figure 2, la deuxième position latérale T2 est calculée en fonction de la position des véhicules présents sur les voies L1 et L3, c'est-à-dire les véhicules V1, V2, V3, V4, V9, V10, V11, V12. La troisième étape E3 est une étape de calcul d'une troisième position latérale T3 théorique du véhicule ego. La troisième position latérale T3 est calculée en fonction d'obstacles statiques (par exemple des murs ou des barrières) détectés sur des côtés de ladite voie de circulation. La quatrième étape E4 est une étape de calcul dans laquelle on calcule la position latérale du véhicule ego Tego en fonction de la première position latérale T1, de la deuxième position latérale T2 et de la troisième position latérale T3. La cinquième étape E5 est une étape de commande autonome du dispositif de direction 3 du véhicule ego pour faire prendre au véhicule ego la position latérale théorique Tego calculée lors de la quatrième étape E4. La sixième étape E6 est une étape d'affichage sur l'écran 6 du véhicule ego d'une indication visuelle indiquant la position relative du véhicule ego par rapport à la ligne médiane théorique de la voie de circulation du véhicule ego, c'est-à-dire par rapport à la ligne médiane M2 selon la situation représentée sur la figure 2.

En remarque, une position latérale est dite "théorique" par opposition à une position latérale réelle. Une position latérale théorique calculée à un instant donné ne correspond donc pas forcément à la position latérale réelle du véhicule à cet instant. Nous allons à présent expliquer plus en détail chacune de ces étapes E0 à E6.

Lors de l'étape d'initialisation E0, on effectue certaines vérifications et détections préalables aux étapes de calcul permettant de calculer la position latérale Tego du véhicule ego. Les étapes ultérieures du procédé de calcul peuvent être modifiées, interrompues ou arrêtées si ces conditions ne sont pas remplies et/ou si aucun véhicule ni obstacle n'est détecté.

Dans une première sous-étape E01 de l'étape d'initialisation E0, on vérifie si les lignes de démarcation D2, D3 de la voie de circulation L2 sur laquelle circule le véhicule ego sont bien détectées par les capteurs 4. Si c'est bien le cas, on peut en déduire la position de la ligne médiane M2 de la voie de circulation L2 sur laquelle circule le véhicule ego. Comme expliqué précédemment, la ligne médiane M2 peut être calculée comme la ligne positionnée à équidistance des lignes de démarcation D2 et D3. La ligne médiane M2 peut également être calculée par un algorithme ou régulateur connu type LCA ou "Lane Centering Assist". Si les lignes de démarcation sont inexistantes ou faiblement visibles, le procédé peut être interrompu jusqu'à ce que des lignes de démarcation soient à nouveau bien visibles.

Dans une deuxième sous-étape E02 de l'étape d'initialisation E0, on calcule la courbure de la voie de circulation L2. Si le rayon de courbure de la voie de circulation du véhicule ego est inférieur ou égal à un seuil prédéfini, le procédé peut être interrompu jusqu'à ce que le rayon de courbure de la voie de circulation dépasse à nouveau le seuil prédéfini. On peut par exemple calculer le rayon de courbure de la ligne médiane M2. Si le rayon de courbure est inférieur à une valeur prédéfinie alors le procédé est interrompu jusqu'à ce que le rayon de courbure redevienne supérieur à la valeur prédéfinie. On évite ainsi que la trajectoire du véhicule soit modifiée dans un virage trop serré ce qui pourrait déstabiliser le véhicule ego et/ou conduire à des calculs de position latérale du véhicule ego biaisés.

D'autres vérifications peuvent également être faites et conditionner la poursuite du procédé de calcul. Par exemple, l'utilisateur du véhicule peut avoir la possibilité d'activer ou de désactiver manuellement le procédé de calcul de la position latérale. Le procédé de calcul pourrait également être activé ou désactivé automatiquement en fonction d'autres paramètres de fonctionnement du véhicule tels que par exemple la détection d'un dysfonctionnement du véhicule, notamment un dysfonctionnement d'un système de conduite autonome, la détection d'une activation d'un système de contrôle de la trajectoire du véhicule de type ESP ou ABS, ou encore la détection d'une situation de conduite critique quelconque.

Dans une troisième sous-étape E03, on scanne l'environnement du véhicule avec les capteurs 4 en vue de détecter des véhicules et/ou des objets environnant le véhicule. Si aucun véhicule et/ou obstacle n'est détecté le procédé peut être mis en attente ou interrompu jusqu'à ce que des véhicules et/ou obstacles soient détectés. Lorsque des véhicules sont détectés dans l'environnement du véhicule ego, on peut déterminer leur position, leur vitesse respective et même leur trajectoire. La position des véhicules peut être déterminée relativement à la position du véhicule ego. Par exemple, la position des véhicules environnant peut être définie dans un repère formé par les vecteurs X et Y, le repère étant centré sur le véhicule ego. On peut notamment calculer la distance séparant le véhicule ego de chaque véhicule détecté. On détermine également sur qu'elle voie de circulation les véhicules sont positionnés. Lorsque des véhicules sont détectés dans la voie de circulation du véhicule ego (devant ou derrière le véhicule ego), on peut calculer la position latérale de ces véhicules. Notamment on peut calculer la position de chacun de ces véhicules relativement à la ligne médiane M2. De plus, on peut calculer la distance longitudinale séparant le véhicule ego des véhicules positionnés sur la même voie de circulation que le véhicule ego. La distance longitudinale entre deux véhicules sur la même voie de circulation peut être définie comme la distance séparant les deux véhicules en suivant le tracé de la ligne médiane, c'est-à-dire l'abscisse curviligne décrite par la route. La distance longitudinale séparant deux véhicules est donc plus importante que la distance absolue (à vol d'oiseau) séparant deux véhicules lorsque la ligne médiane décrit une courbe.

Lors de l'étape d'initialisation E0, on peut également détecter des objets ou obstacles statiques, c'est-à-dire immobiles par rapport à la route. Finalement, à l'issue de l'étape d'initialisation E0, on obtient une représentation de l'environnement du véhicule ego. Selon une variante de réalisation, la représentation du véhicule ego pourrait non pas être obtenue à l'aide de capteurs 4 embarqués dans le véhicule ego mais être transmise par un moyen de communication sans fil au véhicule ego. Par exemple la position et la vitesse de chaque véhicule environnant le véhicule ego pourrait être obtenue grâce à un protocole de communication entre véhicules.

Dans une quatrième sous-étape E04 de l'étape d'initialisation E0, on peut vérifier particulièrement la présence de véhicules précédant et/ou succédant dans la voie de circulation L2 du véhicule ego. En particulier, on peut vérifier premièrement si au moins un premier véhicule précédant le véhicule ego est détecté dans la voie de circulation du véhicule ego. Deuxièmement, on peut vérifier si au moins un deuxième véhicule précédant ou succédant le véhicule ego est détecté dans la voie de circulation du véhicule ego. Par ailleurs on peut vérifier si aucun clignotant du véhicule ego n'est activé, ce qui démontrerait une absence d'intention de dépasser de la part du véhicule ego. Si ces trois conditions sont satisfaites alors la première étape de calcul E1 pourra être exécutée. A défaut, le procédé de calcul complet pourrait être interrompu jusqu'à ces conditions soit à nouveau satisfaites. En variante, le procédé pourrait être poursuivi sans exécuter la première étape de calcul E1 et en basant le calcul de la position latéral Tego uniquement sur la deuxième position latérale T2 et la troisième position latérale T3. Selon une autre variante, le procédé pourrait être poursuivi si seulement un véhicule devant le véhicule ego est détecté et si la vitesse du véhicule ego est suffisamment basse.

Les sous-étapes E01, E02, E03 et E04 peuvent être exécutées indépendamment les unes des autres, successivement ou en parallèle. Elles peuvent être répétées indéfiniment, même au cours de l'exécution des étapes ultérieures E1 à E6. En remarque, lorsque le procédé de calcul de la position latérale est interrompu, arrêté ou modifié, le véhicule ego peut se positionner progressivement de manière conventionnelle au centre de sa voie de circulation, par exemple de sorte à ce que le centre du véhicule ego se situe sur la ligne médiane M2.

La première étape de calcul E1 peut comprendre une sous-étape de calcul d'une moyenne pondérée des positions latérales de véhicules précédent et/ou succédant sur ladite voie de circulation, les coefficients de pondération de chaque position latérale étant fonction de la distance séparant le véhicule ego du véhicule précédant et/ou succédant considéré, et de la vitesse du véhicule précédant et/ou succédant considéré. Autrement dit, la première position latérale T1 peut être calculée avec la formule suivante :

[Math 1]

$$T1 = \frac{\sum_{i=1}^{i=N} a_{Vi} T_{Vi}}{\sum_{i=1}^{i=N} a_{Vi}}$$

Dans laquelle :

- N désigne le nombre de véhicules détectés dans la voie de circulation du véhicule ego,
- i désigne un indice des véhicules présents dans la voie de circulation du véhicule ego,
- Tvi désigne la position latérale du véhicule i dans la voie de circulation du véhicule ego,
- avi désigne un coefficient de pondération associé à la position latérale du véhicule i.

Chaque coefficient de pondération avi peut être calculé selon la formule suivante :

[Math 2]

$$a_{Vi} = \min(f(D_{Vi}), g(V_{Vi}))$$

Dans laquelle :

- Dvi désigne la distance longitudinale séparant le véhicule ego du véhicule i,
- Vvi désigne la vitesse du véhicule i,
- f et g désignent des cartographies, c'est-à-dire des fonctions.

Par exemple, les cartographies f et g peuvent être définies de sorte que les coefficients de pondération respectent l'inégalité suivante : av7 > av6 > av8 > av5. Les cartographies f et g peuvent également être définies de sorte que les coefficients de pondération avi augmentent lorsque les véhicules i se rapprochent du véhicule ego et si leurs vitesses diminuent. Les fonctions f et g peuvent aussi faire l'objet d'une mise au point sur véhicule de sorte à affiner le comportement du véhicule ego. Les coefficients de pondération avi peuvent également évoluer en fonction d'éventuels défaut systémiques de capteurs du véhicule. Lorsqu'un véhicule i se déplace latéralement dans la voie du véhicule ego dans le but de changer de voie, son coefficient de pondération avi peut être forcé à 0. Autrement dit, on ne s'aligne pas sur sa position latérale Tvi du véhicule i le temps que celui-ci effectue sa manoeuvre de changement de voie.

Comme expliqué dans la description de la sous-étape d'initialisation E04, pour exécuter la première étape de calcul E1, il faut de préférence au minimum deux véhicules devant le véhicule ego ou un véhicule devant le véhicule ego et un véhicule derrière le véhicule ego, ou encore seulement un véhicule devant à basse vitesse. La première position latérale T1 reproduit donc une moyenne des positions latérales des véhicules situées dans la même file ou voie de circulation que le véhicule ego. Si les véhicules de la même voie de circulation que le véhicule ego sont globalement déportés vers la gauche, alors le véhicule ego se déportera également vers la gauche. De même, si les véhicules de la même voie de circulation que le véhicule ego sont globalement déportés vers la droite, alors le véhicule ego se déportera également vers la droite. En adoptant une telle position, le véhicule ego se fond dans le flux de circulation. Un couloir de passage pour des motos, voire même pour des véhicules d'urgence (par exemple des ambulances, des véhicules de pompiers, des véhicules de police, ...) peut être formé. Le véhicule ego ne gênera pas le passage des motos ou des véhicules d'urgence entre les véhicules. De plus, le véhicule ego se positionne davantage dans le prolongement du véhicule qui le précède. Il peut donc mieux profiter de son aspiration. Le conducteur du véhicule précédant le véhicule ego peut également mieux observer l'environnement routier avec ses rétroviseurs latéraux sans que sa vision soit masquée par le véhicule ego.

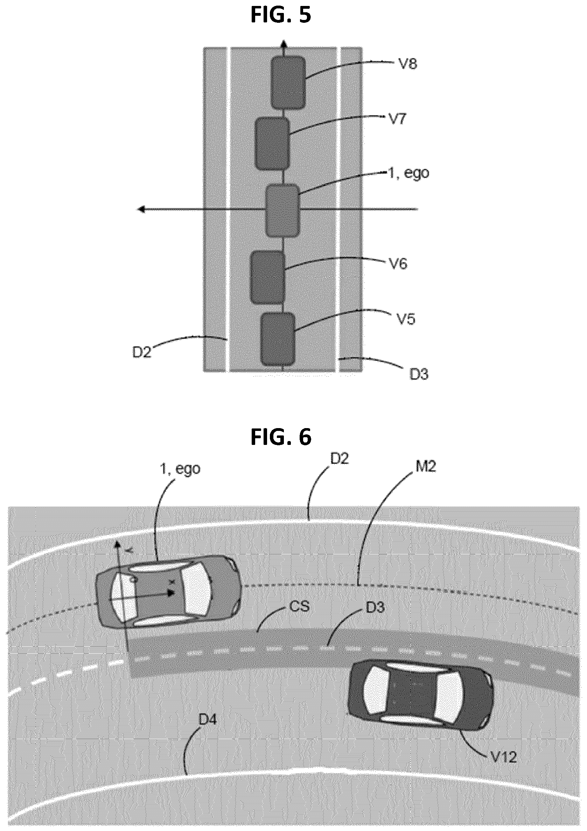

Sur l'exemple illustré sur la figure 4, le véhicule précédant V7 et le véhicule succédant V6 sont positionnés tous les deux davantage vers l'intérieur du virage, c'est-à-dire à droite de la ligne médiane M2. Le véhicule ego calque son positionnement latéral sur celui des véhicules V6 et V7 et se positionne également du côté intérieur du virage. Sur l'exemple de la figure 5, les véhicules V5, V6 et V7 sont positionné du côté gauche de la ligne médiane M2 tandis que le véhicule V8 est positionné du côté droit. Par l'effet du calcul d'une moyenne pondérée des positions latérales des véhicules V5 à V8, le véhicule ego suivant la première position latérale T1 se positionnerait également du côté gauche de la ligne médiane M2.

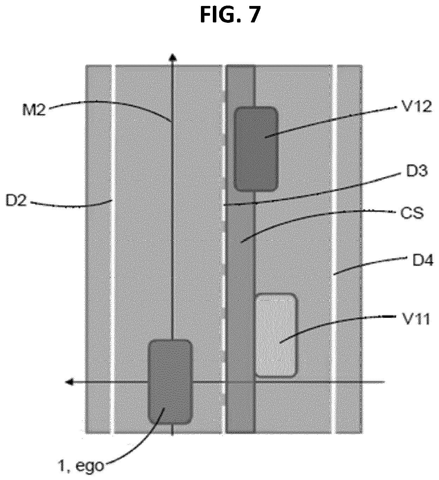

La deuxième étape de calcul E2 est illustrée schématiquement sur les figures 6 et 7. La deuxième étape E2 permet d'adapter la position latérale du véhicule ego en fonction de la présence de véhicules gênants sur les voies de circulation adjacentes à la voie de circulation du véhicule ego. Les véhicules peuvent être gênants notamment lorsqu'ils sont très larges comme par exemple des camions ou des bus ou bien lorsqu'ils sont simplement mal positionnés dans leur propre voie de circulation. La deuxième étape E2 comprend une première sous-étape E21 de calcul d'une marge de sécurité CS théorique, ou couloir de sécurité théorique, de part et d'autre d'une ligne de démarcation s'étendant entre la voie de circulation du véhicule ego et une voie de circulation adjacente à la voie de circulation du véhicule ego. Notamment lors de cette étape, on peut aussi calculer deux couloirs de sécurité de part et d'autre des deux lignes de démarcation D2, D3 délimitant la voie de circulation du véhicule ego à droite et à gauche. Le couloir de sécurité est une surface virtuelle qui peut être définie à cheval entre la voie de circulation du véhicule ego et une voie de circulation adjacente. Le centre du couloir de sécurité peut être positionné sur la ligne de démarcation si bien que le couloir de sécurité s'étend autant dans la voie de circulation du véhicule ego que dans la voie de circulation adjacente. Avantageusement, la largeur du couloir de sécurité peut être paramétrée. Plus cette largeur est importante, plus la probabilité de détecter la présence d'un véhicule dans le couloir de sécurité est importante. Une fois les couloirs de sécurité définis, on surveille à l'aide des capteurs 4 la présence potentielle d'un véhicule dans le couloir de sécurité

Dans une deuxième sous-étape E22, on détecte la présence d'un véhicule dans le couloir de sécurité. Par exemple, selon la situation illustrée sur la figure 6, on détecte la présence du véhicule V12 dans le couloir de sécurité CS. On peut alors calculer la distance séparant le véhicule ego du véhicule détecté dans le couloir de sécurité et la vitesse du véhicule détecté dans le couloir de sécurité.

Dans une troisième sous-étape E23, on calcule la deuxième position latérale en fonction de la distance séparant le véhicule ego du véhicule détecté dans le couloir de sécurité et en fonction de la vitesse du véhicule détecté dans le couloir de sécurité. Notamment, la deuxième position latérale T2 peut être inversement proportionnelle à un délai d'impact TTC avec le véhicule détecté, et proportionnelle à une distance de zone pénétrée par le véhicule détecté dans le couloir de sécurité CS. Le délai d'impact TTC, qui pourrait également être dénommé "time to reach" peut être défini comme la durée au bout de laquelle le véhicule ego pourrait atteindre le véhicule présent dans le couloir de sécurité si leur trajectoire venait à se rencontrer et si aucune correction de ces trajectoires n'était entreprise. La deuxième position latérale T2

Par exemple, la deuxième position latérale T2 peut être calculée avec la formule suivante :

[Math 3]

$$T2 = \min_{j=1 \text{ à } M}(L_{Vj}.G_{Vj}) + \min_{k=1 \text{ à } P}(L_{Vk}.G_{Vk})$$

Dans laquelle :

- M désigne le nombre de véhicules détectés dans la voie de circulation adjacente à gauche de la voie de circulation du véhicule ego,
- j désigne un indice des véhicules présents dans la voie de circulation adjacente à gauche,
- P désigne le nombre de véhicules détectés dans la voie de circulation adjacente à droite de la voie de circulation du véhicule ego,
- k désigne un indice des véhicules présents dans la voie de circulation adjacente à droite,
- Lvj et Lvk désignent respectivement la distance de pénétration des véhicules j et k,
- Gvj et Gvk sont des gains associés respectivement aux véhicules j et k, le gain étant une cartographie fonction du délai d'impact TTC et/ou fonction de la vitesse respectivement des véhicules j et k.

Comme les gains dépendent du délai d'impact TTC, la position latérale T2 peut augmenter au fur et à mesure que le véhicule ego se rapproche d'un véhicule considéré. Plus le délai d'impact TTC est faible, plus le gain associé au véhicule considéré pourra être proche de 1, et plus la deuxième position latérale T2 sera proche de la distance de pénétration dans le couloir de sécurité du véhicule considéré.

Le calcul de la deuxième position latérale T2 peut être réalisé si et seulement si il existe des véhicules pour lesquels le délai d'impact TTC est inférieur à un seuil prédéfini. Les véhicules dont le délai d'impact TTC est supérieur à ce seuil peuvent ainsi être ignorés. Le calcul de la deuxième position latérale T2 peut également ne tenir compte que des véhicules qui ne sont pas en train de réaliser une manoeuvre d'insertion dans la voie du véhicule ego. Une telle manoeuvre peut être détectée par exemple si le véhicule considéré a activé un indicateur lumineux tel qu'un clignotant. Des algorithmes aptes à détecter une manoeuvre de changement de voie d'un véhicule sans activation de son clignotant peuvent également être utilisés.

En référence à la situation illustrée à titre d'exemple sur la figure 7, la présence du véhicule V12 est détectée dans le couloir de sécurité CS à droite de la voie de circulation du véhicule ego. On considère qu'aucun véhicule n'est détecté dans la voie de circulation à gauche de la voie de circulation du véhicule ego ou même que la route ne comprend pas de voie de circulation à gauche de la voie de circulation du véhicule ego. Suivant le calcul expliqué précédemment, le véhicule ego suivant la deuxième position latérale T2 se déporterait du côté gauche de la ligne médiane M2 pour conserver une distance de sécurité latéral suffisante avec le véhicule V12. En revanche dans une situation où deux véhicules gênants seraient détectés dans les couloirs de sécurité à droite et à gauche de la voie de circulation du véhicule ego, le véhicule ego pourrait se centrer de manière à équilibrer les distances de sécurité avec les véhicules gênants de droite et de gauche.

Les situations représentées sur les figures 6 et 7 pourraient se produire dans un cas où le véhicule ego dépasse les véhicules V11 et V12 par la gauche. Un calcul analogue pourrait conduire à déporter vers la droite le véhicule ego si le véhicule ego devait être dépassé par la gauche par un véhicule détecté dans un couloir de sécurité de gauche. Le procédé de calcul pourrait également être transposé pour une utilisation avec conduite à gauche et dépassement par la droite.

Dans la troisième étape de calcul E3, on calcule la troisième position latérale T3 du véhicule ego en fonction des objets statiques environnant le véhicule ego. De la même façon que pour la deuxième étape de calcul E2, une marge autour des lignes adjacentes au véhicule ego est définie. La troisième position latérale T3 est proportionnelle à la distance de pénétration de l'objet statique dans la zone de sécurité autour d'une ligne de démarcation adjacente au véhicule ego. Cette étape de calcul permet par exemple de reproduire le comportement d'un humain qui aurait tendance à décaler son véhicule dans la voie lorsqu'une barrière de sécurité est proche d'une ligne de démarcation adjacente au véhicule ego.

Dans la quatrième étape de calcul E4, on calcule la position latérale du véhicule ego Tego en fonction de la première position latérale T1, de la deuxième position latérale T2 et de la troisième position latérale T3. Plus précisément, la position latérale du véhicule ego Tego peut être calculée avec une moyenne pondérée sous la forme suivante :

[Math 4]

$$Tego = \frac{a1.T1 + a2.T2 + a3.T3}{a1 + a2 + a3}$$

Dans laquelle :

- a1 désigne un coefficient de pondération associé à la première position latérale T1,
- a2 désigne un coefficient de pondération associé à la deuxième position latérale T2, et
- a3 désigne un coefficient de pondération associé à la troisième position latérale T3.

Avantageusement, les coefficients de pondération a1, a2 et a3 peuvent être adaptés en fonctions de conditions de circulation du véhicule ego. Dans une première sous-étape E41 de l'étape de calcul E4, on peut donc détecter les conditions de circulation du véhicule ego. On peut notamment détecter la densité du trafic routier sur la route qu'emprunte le véhicule ego. Cette détection peut par exemple être basée sur un indice obtenu par comptage d'un nombre de véhicules présents dans un périmètre donné autour du véhicule ego. La densité du trafic routier peut également être estimée en analysant la position longitudinale ainsi que latérale des véhicules environnant le véhicule ego.

Dans une deuxième sous-étape E42 de l'étape de calcul E4, on peut calculer les coefficients de pondération a1, a2 et a3 en fonction des conditions de circulation du véhicule ego détectées, notamment en fonction de la densité du trafic routier. Par exemple, on peut définir que a1=a2=a3=1/3 si on souhaite donner autant de poids à chacune des trois positions latérales T1, T2, T3 précédemment calculées. Ces paramètres peuvent être par exemple utilisés lorsque le trafic routier à une densité normale ou habituelle. Lorsqu'on détecte une situation d'embouteillage, par exemple lorsque le nombre de véhicules dans un périmètre donné autour du véhicule ego dépasse un certain seuil, on peut définir les coefficients de pondérations de sorte que a1=0.2 , a2=0.8 et a3=0. Ainsi, on donne plus de poids à la deuxième position latérale T2 précédemment calculée et on ignore la troisième position latérale T3 calculée. On obtient ainsi un positionnement du véhicule ego sur sa voie de circulation plus proche du positionnement obtenu avec un contrôle humain du véhicule. L'utilisation d'un coefficient de pondération égal à 0 permet d'ignorer le calcul de la distance latérale correspondante. Par exemple si les conditions vérifiées lors de la sous-étape d'initialisation E04 ne sont pas vérifiées, on peut donner au coefficient a1 une valeur nulle. La valeur de ces coefficients a1, a2, a3 peut être régulièrement réévaluée en fonction de l'évolution des conditions de circulation.

Afin d'obtenir un calcul de la position latéral assurant la sécurité des automobilistes en toute circonstance, on peut filtrer la position latérale calculée par la moyenne pondérée décrite précédemment. Notamment, dans une troisième sous-étape E43 on peut limiter, ou autrement dit plafonner, l'écart maximal entre la position latérale théorique du véhicule ego et une ligne médiane théorique de la voie de circulation du véhicule ego. Ce plafond peut dépendre de la largeur de voie mesurée. On évite ainsi que le véhicule se déporte trop d'un côté ou de l'autre de la voie de circulation. Notamment, on peut éviter que le véhicule ego rentre lui-même à l'intérieur des couloirs de sécurité définis précédemment. Dans une quatrième sous-étape E44, on peut également limiter la variation temporelle de la position latérale théorique du véhicule ego. On évite ainsi des variations de position latérale trop brusque, ce qui pourrait déstabiliser le véhicule ego. Finalement à l'issue de la quatrième étape E4 on obtient une position latérale Tego idéale qui peut être utilisée pour commander le dispositif de direction 3

Dans une cinquième étape E5, on commande le dispositif de direction du véhicule ego pour lui faire prendre la position latérale Tego calculée lors de la quatrième étape. Cette étape de commande est réalisée de manière autonome, c'est-à-dire sans intervention d'un utilisateur du véhicule. L'écart entre la position latérale réelle mesurée du véhicule ego et la position latérale Tego calculée conduit au calcul d'un angle de consigne des roues directrices et donc un ordre de commande pour les roues directrices. Les roues directrices du véhicule sont donc braquées par le dispositif de direction 3 de sorte à ce que le véhicule ego adopte la position latérale Tego. Les étapes E1 à E5 peuvent ensuite être répétées selon une fréquence définie de manière à ajuster en temps réel la position latérale du véhicule ego.

Dans une sixième étape E6, on peut afficher sur l'écran 6 du véhicule ego d'une indication visuelle indiquant la position relative du véhicule ego par rapport à la ligne médiane de la voie de circulation du véhicule ego. L'indication visuelle peut par exemple consister en une flèche orientée vers la gauche ou orientée vers la droite selon que le véhicule ego est déporté sur la gauche ou sur la droite par rapport à la ligne médiane. Ainsi, les utilisateurs du véhicule ego ne sont pas surpris par le positionnement non centré du véhicule. Ils comprennent que la position excentrée du véhicule ego est délibérée.

Grâce à l'invention, on calcule une position latérale du véhicule à partir du calcul préalable de trois positions latérales distinctes. Chacune des trois positions latérales T1, T2, T3 est calculée en fonction d'une partie de l'environnement du véhicule ego. On obtient finalement un positionnement latéral du véhicule dans sa voie de circulation qui est plus naturel. Le véhicule s'intègre mieux dans le flux de circulation. Il maintient des distances latérales de sécurité adaptées tout en permettant à des motos ou à des véhicules d'urgence de remonter des files de voiture.

## Revendications

1. Procédé de calcul d'une position latérale d'un véhicule (1) automobile ego sur une voie de circulation (L2), le procédé comprenant :

   - une première étape (E1) de calcul d'une première position latérale théorique du véhicule (1) ego sur ladite voie de circulation (L2) en fonction d'une position latérale sur ladite voie de circulation (L2) de véhicules précédant (V7, V8) le véhicule ego et de véhicules succédant (V5, V6) au véhicule ego,
   - une deuxième étape (E2) de calcul d'une deuxième position latérale théorique du véhicule (1) ego sur ladite voie de circulation (L2) en fonction de la position de véhicules (V1, V2, V3, V4, V9, V10, V11, V12) sur des voies de circulation adjacentes (L1, L3) à ladite voie de circulation,
   - une troisième étape (E3) de calcul d'une troisième position latérale théorique du véhicule (1) ego sur ladite voie de circulation (L2) en fonction d'obstacles statiques détectés sur des côtés de ladite voie de circulation (L2),
   - une quatrième étape (E4) de calcul de la position latérale du véhicule (1) ego par une moyenne pondérée de la première position latérale, de la deuxième position latérale et de la troisième position latérale.

2. Procédé de calcul selon la revendication précédente, **caractérisé en ce que** la première étape (E1) de calcul comprend une sous-étape de calcul d'une moyenne pondérée des positions latérales de véhicules précédent (V7, V8) et de véhicules succédant (V5, V6) sur ladite voie de circulation, des coefficients de pondération de chaque position latérale étant fonction de la distance longitudinale séparant le véhicule (1) ego du véhicule précédent (V7, V8) et/ou du véhicule succédant (V5, V6) considéré, et de la vitesse du véhicule précédent et/ou du véhicule succédant considéré.

3. Procédé de calcul selon l'une des revendications précédentes, **caractérisé en ce que** la deuxième étape (E2) de calcul comprend :

   - une sous-étape (E21) de calcul d'un couloir de sécurité (CS) théorique de part et d'autre d'une ligne de démarcation (D2), la ligne de démarcation (D2) s'étendant entre la voie de circulation (L2) du véhicule ego et une voie de circulation adjacente (L1) à la voie de circulation du véhicule ego,
   - une sous-étape (E22) de détection de la présence d'un véhicule dans le couloir de sécurité,
   - une sous-étape (E23) de calcul de la deuxième position latérale (T2) théorique en fonction de la distance séparant le véhicule (1) ego du véhicule (V12) détecté dans ledit couloir de sécurité (CS) et en fonction de la vitesse du véhicule (V12) détecté dans ledit couloir de sécurité (CS).

4. Procédé de calcul selon l'une des revendications précédentes, **caractérisé en ce qu'**il comprend une première condition d'exécution du procédé de calcul, la première condition d'exécution étant remplie:

   - si des lignes de démarcation (D2, D3) de la voie de circulation (L2) du véhicule (1) ego sont détectées par le véhicule ego, et
   - si la courbure de la voie de circulation (L2) du véhicule ego est inférieure ou égale à un seuil prédéfini.

5. Procédé de calcul selon l'une des revendications précédentes, **caractérisé en ce qu'**il comprend une deuxième condition d'exécution de la première étape de calcul, la deuxième condition d'exécution étant remplie :

- si au moins un premier véhicule précédant (V7, V8) le véhicule ego est détecté,
- si au moins un deuxième véhicule précédant ou succédant (V5, V6, V7, V8) le véhicule ego est détecté, et
- si aucun clignotant du véhicule ego n'est activé.

6.  Procédé de calcul selon l'une des revendications précédentes, **caractérisé en ce que** la quatrième étape (E4) de calcul comprend :

    - une sous-étape (E41) de détection de conditions de circulation du véhicule ego, et
    - une sous-étape (E42) de calcul d'un coefficient de pondération de la première position latérale théorique, d'un coefficient de pondération de la deuxième position latérale théorique, et d'un coefficient de pondération de la troisième position latérale théorique en fonction des conditions de circulation du véhicule ego détectées.

7.  Procédé de calcul selon l'une des revendications précédentes, **caractérisé en ce que** la quatrième étape (E4) de calcul comprend :

    - une sous-étape (E43) de limitation de l'écart entre la position latérale théorique du véhicule ego et une ligne médiane (M2) théorique de la voie de circulation (L2) du véhicule ego, et/ou
    - une sous-étape (E44) de limitation de la variation temporelle de la position latérale théorique du véhicule ego.

8.  Procédé de calcul selon l'une des revendications précédentes, **caractérisé en ce qu'**il comprend :

    - une cinquième étape (E5) de commande autonome d'un dispositif de direction (3) du véhicule ego pour faire prendre au véhicule ego la position latérale théorique calculée lors de la quatrième étape (E4),
    - une sixième étape (E6) d'affichage sur un écran (6) du véhicule ego d'une indication visuelle indiquant la position relative du véhicule ego par rapport une ligne médiane (M2) théorique de la voie de circulation (L2) du véhicule ego.

9.  Produit programme d'ordinateur comprenant des instructions de code de programme enregistrées sur un support lisible par ordinateur pour mettre en oeuvre les étapes du procédé selon l'une quelconque des revendications 1 à 8 lorsque ledit programme fonctionne sur un ordinateur.

10. Support d'enregistrement de données, lisible par un ordinateur, sur lequel est enregistré un programme d'ordinateur comprenant des instructions de code de programme de mise en oeuvre du procédé selon l'une des revendications 1 à 8.

11. Système de direction, **caractérisé en ce qu'**il comprend un calculateur (5), un dispositif de direction (3) asservi au calculateur, un écran (6) et des moyens de détection (4) d'un environnement, les moyens de détection (4) étant reliés au calculateur, le calculateur étant apte à mettre en oeuvre le procédé de calcul selon l'une quelconque des revendications 1 à 8.

12. Véhicule (1) automobile, notamment véhicule autonome, comprenant un système de direction selon la revendication 11.


**Patentansprüche**

1.  Verfahren zur Berechnung einer seitlichen Position eines Ego-Kraftfahrzeugs (1) auf einer Fahrspur (L2), das Verfahren umfassend:

    - einen ersten Schritt (E1) des Berechnens einer ersten theoretischen seitlichen Position des Ego-Fahrzeugs (1) auf der Fahrspur (L2) in Abhängigkeit von einer seitlichen Position von Fahrzeugen (V7, V8), die dem Ego-Fahrzeug voraus fahren, und Fahrzeugen (V5, V6), die dem Ego-Fahrzeug hinterher fahren, auf der Fahrspur (L2),
    - einen zweiten Schritt (E2) des Berechnens einer zweiten theoretischen seitlichen Position des Ego-Fahrzeugs (1) auf der Fahrspur (L2) in Abhängigkeit von der Position von Fahrzeugen (V1, V2, V3, V4, V9, V10, V11, V12) auf Fahrspuren (L1, L3), die der Fahrspur benachbart sind,
    - einen dritten Schritt (E3) des Berechnens einer dritten theoretischen seitlichen Position des Ego-Fahrzeugs (1) auf der Fahrspur (L2) in Abhängigkeit von statischen Hindernissen, die an Seiten der Fahrspur (L2) erkannt werden,

- einen vierten Schritt (E4) des Berechnens der seitlichen Position des Ego-Fahrzeugs (1) durch einen gewichteten Durchschnitt der ersten seitlichen Position, der zweiten seitlichen Position und der dritten seitlichen Position.

2. Berechnungsverfahren nach dem vorhergehenden Anspruch, **dadurch gekennzeichnet, dass** der erste Schritt (E1) des Berechnens einen Unterschritt des Berechnens eines gewichteten Durchschnitts der seitlichen Positionen von voraus fahrenden Fahrzeugen (V7, V8) und hinterher fahrenden Fahrzeugen (V5, V6) auf der Fahrspur umfasst, wobei Gewichtungskoeffizienten für jede seitliche Position vom Längsabstand, der das Ego-Fahrzeug (1) vom betrachteten voraus fahrenden Fahrzeug (V7, V8) und/oder hinterher fahrenden Fahrzeug (V5, V6) trennt, und von der Geschwindigkeit des betrachteten voraus fahrenden Fahrzeugs und/oder hinterher fahrenden Fahrzeugs abhängig sind.

3. Berechnungsverfahren nach einem der vorhergehenden Ansprüche, **dadurch gekennzeichnet, dass** der zweite Schritt (E2) des Berechnens Folgendes umfasst:

   - einen Unterschritt (E21) des Berechnens eines theoretischen Sicherheitskorridors beiderseits einer Trennlinie (D2), wobei sich die Trennlinie (D2) zwischen der Fahrspur (L2) des Ego-Fahrzeugs und einer Fahrspur (L1), die der Fahrspur des Ego-Fahrzeugs benachbart ist, erstreckt,
   - einen Unterschritt (E22) des Erkennens des Vorhandenseins eines Fahrzeugs im Sicherheitskorridor,
   - einen Unterschritt (E23) des Berechnens der zweiten theoretischen seitlichen Position (T2) in Abhängigkeit von dem Abstand, der das Ego-Fahrzeug (1) von dem Fahrzeug (V12) trennt, das im Sicherheitskorridor (CS) erkannt ist, und in Abhängigkeit von der Geschwindigkeit des Fahrzeugs (V12), das im Sicherheitskorridor (CS) erkannt ist.

4. Berechnungsverfahren nach einem der vorhergehenden Ansprüche, **dadurch gekennzeichnet, dass** es eine erste Ausführungsbedingung des Berechnungsverfahrens umfasst, wobei die erste Ausführungsbedingung erfüllt ist:

   - wenn Trennlinien (D2, D3) der Fahrspur (L2) des Ego-Fahrzeugs (1) vom Ego-Fahrzeug erkannt sind, und
   - wenn die Krümmung der Fahrspur (L2) des Ego-Fahrzeugs kleiner als oder gleich einer vorgegebenen Schwelle ist.

5. Berechnungsverfahren nach einem der vorhergehenden Ansprüche, **dadurch gekennzeichnet, dass** es eine zweite Ausführungsbedingung des ersten Schritts des Berechnens umfasst, wobei die zweite Ausführungsbedingung erfüllt ist:

   - wenn wenigstens ein erstes Fahrzeug (V7, V8), das dem Ego-Fahrzeug voraus fährt, erkannt ist,
   - wenn wenigstens ein zweites Fahrzeug (V5, V6, V7, V8), das dem Ego-Fahrzeug voraus fährt oder hinterher fährt, erkannt ist, und
   - wenn kein Blinker des Ego-Fahrzeugs aktiviert ist.

6. Berechnungsverfahren nach einem der vorhergehenden Ansprüche, **dadurch gekennzeichnet, dass** der vierte Schritt (E4) des Berechnens Folgendes umfasst:

   - einen Unterschritt (E41) des Erkennens von Fahrbedingungen des Ego-Fahrzeugs, und
   - einen Unterschritt (E42) des Berechnens eines Gewichtungskoeffizienten für die erste theoretische seitliche Position, eines Gewichtungskoeffizienten für die zweite theoretische seitliche Position und einen Gewichtungskoeffizienten für die dritte theoretische seitliche Position in Abhängigkeit von den erkannten Fahrbedingungen des Ego-Fahrzeugs.

7. Berechnungsverfahren nach einem der vorhergehenden Ansprüche, **dadurch gekennzeichnet, dass** der vierte Schritt (E4) des Berechnens Folgendes umfasst:

   - einen Unterschritt (E43) des Begrenzens der Abweichung zwischen der theoretischen seitlichen Position des Ego-Fahrzeugs und einer theoretischen Mittellinie (M2) der Fahrspur (L2) des Ego-Fahrzeugs, und/oder
   - einen Unterschritt (E44) des Begrenzens der zeitlichen Variation der theoretischen seitlichen Position des Ego-Fahrzeugs.

8. Berechnungsverfahren nach einem der vorhergehenden Ansprüche, **dadurch gekennzeichnet, dass** es Folgendes umfasst:

 - einen fünften Schritt (E5) des autonomen Steuerns einer Lenkvorrichtung (3) des Ego-Fahrzeugs, damit das Ego-Fahrzeug die theoretische seitliche Position einnimmt, die beim vierten Schritt (E4) berechnet wird,
 - einen sechsten Schritt (E6) des Anzeigens einer visuellen Angabe auf einem Bildschirm (6) des Ego-Fahrzeugs, die die relative Position des Ego-Fahrzeugs bezogen auf eine theoretische Mittellinie (M2) der Fahrspur (L2) des Ego-Fahrzeugs angibt.

9. Computerprogrammprodukt umfassend Programmcode-Anweisungen, die auf einem computerlesbaren Datenträger gespeichert sind, zur Implementierung der Schritte des Verfahrens nach einem der Ansprüche 1 bis 8, wenn das Programm auf einem Computer läuft.

10. Computerlesbares Datenspeichermedium, auf dem ein Computerprogramm gespeichert ist, das Programmcode-Anweisungen zur Durchführung des Verfahrens nach einem der Ansprüche 1 bis 8 umfasst.

11. Lenksystem, **dadurch gekennzeichnet, dass** es einen Rechner (5), eine Lenkvorrichtung (3), die vom Rechner geregelt wird, einen Bildschirm (6) und Mittel zur Erkennung (4) einer Umgebung umfasst, wobei die Erkennungsmittel (4) mit dem Rechner verbunden sind, wobei der Rechner geeignet ist, das Berechnungsverfahren nach einem der Ansprüche 1 bis 8 durchzuführen.

12. Kraftfahrzeug (1), insbesondere autonomes Fahrzeug, umfassend ein Lenksystem nach Anspruch 11.

**Claims**

1. Method for calculating a lateral position of an ego motor vehicle (1) on a traffic lane (L2), the method comprising:

 - a first step (E1) of calculating a first theoretical lateral position of the ego vehicle (1) on said traffic lane (L2) as a function of a lateral position on said traffic lane (L2) of vehicles preceding (V7, V8) the ego vehicle and of vehicles succeeding (V5, V6) the ego vehicle,
 - a second step (E2) of calculating a second theoretical lateral position of the ego vehicle (1) on said traffic lane (L2) as a function of the position of vehicles (V1, V2, V3, V4, V9, V10, V11, V12) on traffic lanes (L1, L3) adjacent to said traffic lane,
 - a third step (E3) of calculating a third theoretical lateral position of the ego vehicle (1) on said traffic lane (L2) as a function of static obstacles detected on the sides of said traffic lane (L2),
 - a fourth step (E4) of calculating the lateral position of the ego vehicle (1) using a weighted average of the first lateral position, the second lateral position and the third lateral position.

2. Calculation method according to the preceding claim, **characterized in that** the first calculation step (E1) comprises a sub-step of calculating a weighted average of the lateral positions of preceding vehicles (V7, V8) and of succeeding vehicles (V5, V6) on said traffic lane, weighting coefficients of each lateral position being a function of the longitudinal distance separating the ego vehicle (1) from the preceding vehicle (V7, V8) and/or from the succeeding vehicle (V5, V6) in question, and of the speed of the preceding vehicle and/or of the succeeding vehicle in question.

3. Calculation method according to one of the preceding claims, **characterized in that** the second calculation step (E2) comprises:

 - a sub-step (E21) of calculating a theoretical safety corridor (CS) on either side of a demarcation line (D2), the demarcation line (D2) extending between the traffic lane (L2) of the ego vehicle and a traffic lane (L1) adjacent to the traffic lane of the ego vehicle,
 - a sub-step (E22) of detecting the presence of a vehicle in the safety corridor,
 - a sub-step (E23) of calculating the second theoretical lateral position (T2) as a function of the distance separating the ego vehicle (1) from the vehicle (V12) detected in said safety corridor (CS) and as a function of the speed of the vehicle (V12) detected in said safety corridor (CS).

4. Calculation method according to one of the preceding claims, **characterized in that** it comprises a first condition for execution of the calculation method, the first condition of execution being met:

- if lines of demarcation (D2, D3) of the traffic lane (L2) of the ego vehicle (1) are detected by the ego vehicle, and
- if the curvature of the traffic lane (L2) of the ego vehicle is less than or equal to a predefined threshold.

5. Calculation method according to one of the preceding claims, **characterized in that** it comprises a second condition for execution of the first calculation step, the second execution condition being met:

- if at least a first vehicle (V7, V8) preceding the ego vehicle is detected,
- if at least a second vehicle preceding or succeeding (V5, V6, V7, V8) the ego vehicle is detected, and
- if no indicator of the ego vehicle is activated.

6. Calculation method according to one of the preceding claims, **characterized in that** the fourth calculation step (E4) comprises:

- a sub-step (E41) of detecting traffic conditions of the ego vehicle, and
- a sub-step (E42) of calculating a weighting coefficient of the first theoretical lateral position, a weighting coefficient of the second theoretical lateral position, and a weighting coefficient of the third theoretical lateral position as a function of the detected traffic conditions of the ego vehicle.

7. Calculation method according to one of the preceding claims, **characterized in that** the fourth calculation step (E4) comprises:

- a sub-step (E43) of limiting the deviation between the theoretical lateral position of the ego vehicle and a theoretical center line (M2) of the traffic lane (L2) of the ego vehicle, and/or
- a sub-step (E44) of limiting the temporal variation of the theoretical lateral position of the ego vehicle.

8. Calculation method according to one of the preceding claims, **characterized in that** it comprises:

- a fifth step (E5) of autonomous control of a steering device (3) of the ego vehicle to make the ego vehicle assume the theoretical lateral position calculated in the fourth step (E4),
- a sixth step (E6) of displaying, on a screen (6) of the ego vehicle, a visual indication indicating the relative position of the ego vehicle with respect to a theoretical center line (M2) of the traffic lane (L2) of the ego vehicle.

9. Computer program product comprising program code instructions recorded on a medium that can be read by a computer in order to implement the steps of the method according to any one of Claims 1 to 8 when said program is operating on a computer.

10. Data recording medium, that can be read by a computer, upon which is recorded a computer program comprising program code instructions for implementing the method according to one of Claims 1 to 8.

11. Steering system, **characterized in that** it comprises a computer (5), a steering device (3) servo-connected to the computer, a screen (6) and means (4) of detecting an environment, the detection means (4) being connected to the computer, the computer being capable of implementing the calculation method according to any one of Claims 1 to 8.

12. Motor vehicle (1), notably an autonomous vehicle, comprising a steering system according to Claim 11.

EP 3 980 308 B1

**FIG. 1**

**FIG. 2**

16

## FIG. 3

## FIG. 4

## FIG. 5

## FIG. 6

# FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017326980 A1
- JP 2019059451 A
- US 2005228588 A1
- EP 3002178 A1